# EUROPEAN PATENT APPLICATION

(11) **EP 2 599 625 A1**
(43) Date of publication of application: **05.06.2013**
(21) Application number: 11812491.6
(22) Date of filing: 26.07.2011
(51) Int. Cl.: B32B 27/28, B32B 27/32, B65D 30/02, B65D 65/40, B65D 81/24

(54) **COEXTRUDED FILM, AND BAG USING SAME**

(30) Priority: 30.07.2010 JP 2010172264
(71) Applicant: Hosokawa Yoko Co., Ltd., Tokyo 102-0084 (JP)
(72) Inventor: IWASAKI Toshiharu, Tokyo 102-0084 (JP); NAKAMURA Manabu, Tokyo 102-0084 (JP); YOSHIDA Haruyuki, Omachi-shi Nagano 398-0002 (JP)
(74) Representative: Krauns, Christian
(86) International application number: PCT/JP2011/066987
(87) International publication number: WO 2012/014902

(57) **Abstract**

Provided is a coextruded film (10) including an adhesive layer (12), which is formed from a blend of a maleic anhydride modified polyolefin resin and a polyolefin resin, between a barrier layer (11) that is formed from an ethylene vinyl alcohol copolymer, and a sealant layer (13) that is formed from a polyolefin resin. When this adhesive layer is applied, it is possible to provide a coextruded film which has a sufficient barrier property due to the barrier layer formed from the ethylene vinyl alcohol copolymer, and in which surface gloss is satisfactory, and irregularities are suppressed, and thus the exterior appearance thereof is excellent.

## Description

### Technical Field

The present invention relates to a coextruded film that is suitably used to manufacture a bag.
Priority is claimed on Japanese Patent Application No. 2010-172264, filed July 30, 2010, the content of which is incorporated herein by reference.

### Background Art

In packages for medical use that are used in infusion solution bags and biological formulation bags, and in packages for food, an oxygen barrier property is necessary so as to prevent oxidation deterioration of the contents. In addition, so as to make these packages into bags, it is necessary for the packages to have a sealing property, and particularly, a heat sealing property.
Therefore, package films provided with a barrier layer having the oxygen barrier property and a sealant layer having the heat sealing property have been widely reviewed. For example, Patent Document 1 discloses a laminated body in which an ethylene vinyl alcohol copolymer is used for the barrier layer, and a layer formed from an ethylene propylene copolymer-based acid-modified polyolefin is provided as an adhesive layer between the barrier layer and the sealant layer.

### Citation List

### Patent Document

[Patent Document 1] Japanese Patent No. 2837434

### Summary of Invention

### Technical Problem

However, in a case where the film, which includes the adhesive layer formed from the modified polyolefin resin between the barrier layer formed from ethylene vinyl alcohol copolymer and the sealant layer, is manufactured by coextrusion, the surface of the barrier layer becomes rough and thus irregularities are formed. As a result, glossiness deteriorates and thus the exterior appearance becomes inferior.

The invention has been made in consideration of the above-described circumstances, and an object thereof is to provide a coextruded film which includes a barrier layer formed from an ethylene vinyl alcohol copolymer and thus has a sufficient barrier property, and in which surface glossiness is satisfactory, and irregularities are suppressed, and thus the exterior appearance is excellent; and a bag using the coextruded film.

### Solution to Problem

The present inventors made a thorough investigation, and as a result thereof, they found that when the adhesive layer is formed from a specific composition, even when the film including the barrier layer formed from an ethylene vinyl alcohol copolymer is manufactured by coextrusion, surface glossiness can be maintained in a satisfactory state, and thus irregularities can be suppressed.

According to an aspect of the invention, there is provided a coextruded film including: a barrier layer that is formed from an ethylene vinyl alcohol copolymer; a sealant layer that is formed from a polyolefin resin; and an adhesive layer that is formed from a blend of a maleic anhydride modified polyolefin resin and a polyolefin resin, and that is provided between the barrier layer and the sealant layer.
The sealant layer may be a blend of a metallocene-based linear low-density polyethylene resin, and a high-pressure low-density polyethylene resin.
In addition, the sealant layer may include a layer that is adjacent to the adhesive layer and is formed from a metallocene-based linear low-density polyethylene resin and a layer that is adjacent to the layer and is formed from a high-density polyethylene resin.
The coextruded film of the invention is suitable to manufacture a bag.

### Advantageous Effects of Invention

According to the invention, it is possible to provide a coextruded film, which includes a barrier layer formed from an ethylene vinyl alcohol copolymer and thus has a sufficient barrier property, and in which surface glossiness is satisfactory, and irregularities are suppressed, and thus the exterior appearance thereof is excellent, and a bag using the coextruded film.

### Brief Description of Drawings

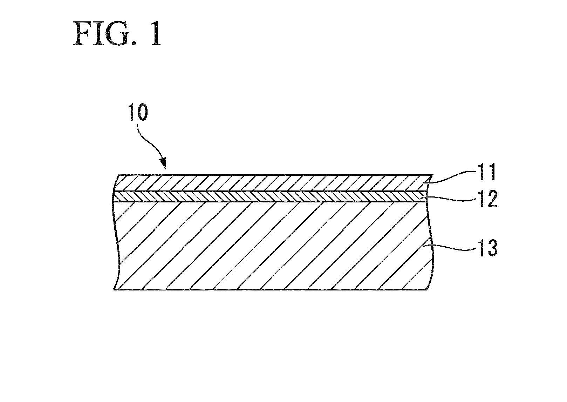

FIG. 1 is a cross-sectional diagram illustrating an example of a coextruded film of the invention.

### Description of Embodiments

Hereinafter, the invention will be described in detail.
FIG. 1 illustrates a three-layered coextruded film that is an example of the coextruded film of the invention. The coextruded film 10 of this example includes a barrier layer 11 that is formed from an ethylene vinyl alcohol copolymer, a sealant layer 13 that is formed from a polyolefin resin, and an adhesive layer 12 that is formed from a blend of a maleic anhydride modified polyolefin resin and a polyolefin resin and that is provided between the barrier layer 11 and the sealant layer 13.

### (Barrier Layer)

The ethylene vinyl alcohol copolymer (hereinafter, may be referred to as "EVOH"), which makes up the barrier layer 11, has a gas barrier property with respect to a gas, particularly, an oxygen gas.
In the EVOH, it is preferable that an ethylene copolymerization ratio be 10 to 55 mol%, and more preferably 25 to 45 mol%. When the ethylene copolymerization ratio is less than the above-described range, a water resistant property of the obtained coextruded film 10 tends to decrease, and when the ratio exceeds the above-described range, the gas barrier property tends to decrease.
Examples of the EVOH include "Soarnol (trade name)" manufactured by Nippon Synthetic Chemical Industry Co., Ltd., and "EVAL (trade name)" manufactured by KURARAY CO., LTD.
In addition, the barrier layer 11 may contain an oxygen absorbing agent.

It is preferable that the thickness of the barrier layer 11 be within a range of 10 to 100 µm from the viewpoint of securing the oxygen barrier property.

### (Sealant Layer)

The sealant layer 13 is melted by heating and functions as a heat sealing layer when the coextruded film 10 is manufactured into a bag.
A polyolefin resin is used for the sealant layer 13. Specific examples of the polyolefin resin include: polyethylene-based resins such as high-density polyethylene, medium-density polyethylene, high-pressure low-density polyethylene, low-density polyethylene, linear low-density polyethylene, and an ethylene-vinyl acetate copolymer; olefin-based elastomers such as an ethylene-butadiene random copolymer; polypropylene-based resins such as polypropylene, an ethylene-propylene random copolymer, and an α-olefin-propylene random copolymer; a mixture thereof; and the like.

Among these, from the viewpoint of increasing drop test strength of a bag manufactured from the coextruded film 10, it is preferable to use linear low-density polyethylene, particularly, a metallocene-based linear low-density polyethylene resin.
Furthermore, when the sealant layer 13 is formed from a blend that is obtained by blending the high-pressure low-density polyethylene resin with the metallocene-based linear low-density polyethylene resin, it is possible to prevent blocking between sealant layers 13 of the coextruded film 10. That is, this is preferable from the viewpoint that the blocking property can be improved. The blend ratio (the metallocene-based linear low-density polyethylene resin: the high-pressure low-density polyethylene resin) of the blend is preferably from 90:10 to 10:90 by mass ratio, and more preferably from 80:20 to 10:90 by mass ratio.

In addition, the sealant layer 13 may be configured with two layers of an inner layer and an innermost layer, and the high-density polyethylene resin may be used in the layer (innermost layer) which makes up a sealant face to improve the blocking property. At this time, when a layer (inner layer) that is adjacent to the adhesive layer 12 is formed from the linear low-density polyethylene resin, preferably, metallocene-based linear low-density polyethylene resin, it is possible to maintain the strength (drop test strength) of a bag manufactured from the coextruded film 10 when dropping the bag.

It is preferable that the thickness of the sealant layer 13 be within a range of 10 to 300 µm from the viewpoint of securing the drop test strength when a bag is manufactured. In addition, in a case where the sealant layer 13 is configured by two layers, it is preferable that the thickness ratio between the layer (innermost layer) making up the sealant face and the layer (inner layer) that is adjacent to the adhesive layer 12 be within a range of from 1:10 to 10:1.

### (Adhesive Layer)

The adhesive layer 12 is disposed between the barrier layer 11 and the sealant layer 13 to bond these layers, and is formed from a blend of a maleic anhydride modified polyolefin resin and a polyolefin resin.

Here, the maleic anhydride modified polyolefin resin is obtained by graft-polymerizing a maleic anhydride in a polyolefin resin by a graft reaction. Maleic anhydride modified polyethylene or maleic anhydride modified polypropylene is preferable as the maleic anhydride modified polyolefin resin, from the viewpoint that the bonding property is excellent. Specific examples thereof include "ADMER (registered trademark)" manufactured by Mitsui Chemicals, Inc., "Adtex (registered trademark)" manufactured by Japan Polyethylene Corporation, "Modic (registered trademark)" and "ZELAS (registered trademark)" manufactured by Mitsubishi Chemical Corporation, and the like.

The polyolefin resin that is blended into the maleic anhydride modified polyolefin resin is a non-modified resin that is not modified by a maleic anhydride or the like. Examples of the polyolefin resin include high-density, medium-density, or low-density polyethylene, an ethylene-α-olefin copolymer, polypropylene, polybutene, polyisobutylene, ionomer resin, and the like.

As described above, when the adhesive layer 12 is formed from a blend of the maleic anhydride modified polyolefin resin and the polyolefin resin, it is possible to suppress a decrease in the surface glossiness of the barrier layer 11 or formation of irregularities when forming a film using the EVOH as the barrier layer 11 by coextrusion.
This reason is not clear, but the reasons may be as follows.
That is, since the EVOH has high polarity, it may be assumed that the EVOH easily adheres to a surface of a metallic die of an extruder during the coextrusion, and as a result thereof, a surface of the EVOH tends to be rough. At this time, when the EVOH is strongly bonded to the adjacent adhesive layer 12, a force that is applied in a coextrusion direction strongly acts on the barrier layer 11 formed from the EVOH from the adhesive layer 12 side. As a result thereof, the EVOH that adheres to the surface of the die is strongly pushed, and thus the roughness of the barrier layer becomes relatively significant.
On the other hand, when the maleic anhydride modified polyolefin resin and the polyolefin resin are used in combination as the resin that forms the adhesive layer 12, It is possible to mitigate the strong bonding strength of the maleic anhydride modified polyolefin resin. As a result, the above-described force, which acts on the barrier layer 11 from the adhesive layer side, is suppressed, and thus it is assumed that the surface roughness of the EVOH can be reduced.

It is preferable that the blend ratio between the maleic anhydride modified polyolefin resin and the polyolefin resin be from 25:75 to 75:25 by a mass ratio, and more preferably from 40:60 to 60:40 by a mass ratio. Within this range, it is possible to suppress a decrease in the surface glossiness of the barrier layer 11 that is formed from the EVOH and formation of irregularities, and it is also possible to sufficiently maintain bonding between the barrier layer 11 and the sealant layer 13.

In addition, it is preferable to select the same kinds of polyolefin as the maleic anhydride modified polyolefin resin and the polyolefin resin, from the viewpoint of mutual compatibility. That is, when using polyethylene-based maleic anhydride modified product, it is preferable that non-modified polyethylene-based resin be blended into the modified product.

It is preferable that the thickness of the adhesive layer 12 be within a range of 5 to 100 µm from the viewpoint of securing the bonding strength and the drop test strength of a manufactured bag.

### (Others)

Additives, which are generally used in a resin film in the related art, may be contained as necessary in the respective layers making up the coextruded film 10 within a range that does not deteriorate the effect of the invention. Examples of the additives include an antistatic agent, an antioxidant, a lubricant, an anti-blocking agent, an anti-fogging agent, and the like.

### (Method of Manufacturing Coextruded Film)

The coextruded film 10 may be manufactured by a coextrusion method such as a method using a T die extruder, or a water-cooling type or air-cooling type coextrusion inflation method. Among these, the water-cooling type coextrusion inflation method is preferable from the viewpoint that a coextruded film 10 having excellent transparency may be obtained, and from the viewpoint that the economic efficiency and the hygienic property are satisfactory.

It is preferable that the thickness of the coextruded film 10 that is obtained as described above be 100 to 400 µm, but the thickness may be set in accordance with an intended use. In addition, the thickness ratio of the respective layers is not particularly limited.

### (Bag)

The bag of the invention is obtained by making the sealant layers 13 of the above-described coextruded film 10 be opposite to each other and by performing sealing.
The sealing may be performed by heating sealing, impulse sealing, ultrasonic sealing, or the like.
Examples of the types of a bag include, in addition to a two-sided sealing bag obtained by sealing a cylindrical film manufactured by the inflation method at two sides, a three-sided sealing bag, a four-sided sealing bag, a self standing bag such as a standing pouch, a bag in which a pouring outlet is formed, and the like.
In addition, examples of uses of the bag include medical uses such as an infusion solution bag, a biological formulation bag, and a cell culture bag; food package uses; and the like. The bag can be appropriately used for a use in which a gas barrier property, particularly, an oxygen barrier property, is necessary without limitations.

### EXAMPLES

Hereinafter, the invention will be described in detail with reference to examples.

### <Examples 1 to 11 and Comparative Examples 1 to 3>

Coextruded films having configurations shown in Table 2 were manufactured using respective resins described in Table 1 by a water-cooling type coextrusion inflation method. In addition, in Table 1, each value of the melt flow rate is obtained by performing measurement in compliance with the Japanese Industrial Standard: JIS K7210 under a condition of load of 21.18 N at 190°C with respect to a polyethylene resin, and at 230°C with respect to a polypropylene resin and EVOH. In addition, the density is measured by the Japanese Industrial Standard: JIS K7112 D method.
The following evaluation was performed with respect to the obtained coextruded films.

### (1) Exterior Appearance of Film

A surface of each of the films was visually observed, and was evaluated in the following three grades of A to C.
Note that the film surface represents a surface of the barrier layer.
A: Surface glossiness is high and the exterior appearance is satisfactory.
B: Irregularity is slightly present, but surface glossiness is high, and the exterior appearance is satisfactory.
C: Irregularity is present, the surface glossiness is low, and the exterior appearance is inferior.

### (2) Oxygen Barrier Property

Oxygen permeability was measured in compliance with the B method (isostatic pressure method) that is defined in the Japanese Industrial Standard: JIS K7126-1987 "a test method of gas permeability of plastic film and sheets".
This measurement was performed under environments in which the temperature was 30°C and the relative humidity was 70% using Oxtran 2/21 manufactured by Modern Control Co., Ltd.

### (3) Bonding Strength

Peeling strength between the barrier layer and the adhesive layer was measured in compliance with the Japanese Industrial Standard: JIS Z0238. Specifically, 180° peeling strength in the vicinity of a width of 15 mm was measured with a tension rate of 300 mm/minute.

### (4) Blocking Property Test

The sealant layers of the coextruded film were overlapped with each other, a load of 10 kg for 10 cm x 10 cm was applied, and then the coextruded film was left as is at 50°C for 24 hours. Then, the coextruded film was left as is at 23°C for 24 hours, and then was cut into 10 cm x 10 cm pieces. Then, the peeling strength was measured at a speed of 300 mm/minute, and an evaluation was performed.
Evaluation of the blocking property was performed and the coextruded films were given one of the following three grades of A to C.
A: Peeling strength is smaller than 3 N, and an opening property is satisfactory.
B: Peeling strength is equal to or more than 3 N and less than 5 N and it is difficult to open, but opening is possible.
C: Peeling strength is 5 N or more, and opening is impossible.

### (5) Bag Drop Test

The sealant layers of the coextruded films were made to be opposite to each other and were heat sealed, whereby a three-sided sealing rectangular bag of 15 cm x 25 cm was manufactured. 500 ml of distilled water was poured into the bag, and then the remaining side was sealed, whereby each bag into which distilled water was poured was manufactured.
Immediately after five bags were left as is at 4°C for 24 hours, the five bags were dropped from heights of 2 m, 1.5 m, and 1 m, respectively, and it was confirmed whether or not a fracture occurred in each bag. Evaluation was performed and the five bags were given one of the following three grades of A to C.
A: In a bag dropped from a height of 2 m, all of the five bags were not fractured.
B: In a bag dropped from a height of 1.5 m, all of the five bags were not fractured.
C: In a bag dropped from a height of 1 m, all of the five bags were not fractured.

**[Table 1]**

| Abbreviated Symbols in Table 2 | Resin | Melt Flow Rate [g/10 minutes] | Density [g/cm³] | Trade Name | Remark |
|---|---|---|---|---|---|
| PE1 | Metallocene-based linear low-density polyethylene | 0.9 | 0.91 | "HARMOLEX" manufactured by Japan Polyethylene Co., Ltd. | |
| PE2 | Metallocene-based linear low-density polyethylene | 2 | 0.921 | "KARNEL" manufactured by Japan Polyethylene Co., Ltd. | |
| PE3 | High-density polyethylene | 3.5 | 0.956 | | |
| PE4 | High-pressure low-density polyethylene | 0.8 | 0.927 | | |
| EVA | Ethylene-vinyl acetate copolymer | 0.3 | - | | Content of vinyl acetate is 4 mass% |
| PP | Polypropylene | 2 | 0.9 | "ZERAS MC7023" manufactured by Mitsubishi Chemical Co., Ltd. | |
| AD1 | Maleic anhydride modified polypropylene resin | 3.5 | 0.9 | "ZERAS MC721AP" manufactured by Mitsubishi Chemical Co., Ltd. | |
| AD2 | Maleic anhydride modified polyethylene resin | 4 | 0.91 | "ADTEX DU0500" manufactured by Japan Polyethylene Co., Ltd. | |
| EVOH | Ethylene-vinyl alcohol copolymer | 8 | - | "EVAL" manufactured by KURARAY CO., LTD. | Ethylene is 27 mol% |

**[Table 2]**

| | Configuration of Coextruded Film | | | Evaluation | | | | |
|---|---|---|---|---|---|---|---|---|
| | Sealant Layer (Thickness) | Adhesive Layer (Thickness) | Barrier Layer (Thickness) | Exterior Appearance of Film | Oxygen Barrier Property | Bonding Strength | Blocking Property | Bag Drop Test |
| Example 1 | PE2 (270 µm) | AD2:PE2=5:5 (10 µm) | EVOH (20 µm) | A | 0.80 | 3.0 | B | B |
| Example 2 | PE1 (270 µm) | AD1:PP=5:5 (10 µm) | EVOH (20 µm) | A | 0.76 | 3.0 | C | A |
| Example 3 | PE1:PE4=8:2 (270 µm) | AD1:PP=5:5 (10 µm) | EVOH (20 µm) | A | 0.68 | 3.0 | A | A |
| Example 4 | PE1:PE4=8:2 (270 µm) | AD1:PP=7:3 (10 µm) | EVOH (20 µm) | B | 0.75 | 7.0 | A | A |
| Example 5 | PE3 (innermost layer: 10 µm) and PE2 (inner layer: 260 µm) | AD2:PE2=5:5 (10 µm) | EVOH (20 µm) | A | 0.65 | 3.0 | A | B |
| Example 6 | PE3 (innermost layer: 10 µm) and PE4 (inner layer: 260 µm) | AD2:PE2=5:5 (10 µm) | EVOH (20 µm) | A | 0.72 | 3.0 | A | C |
| Example 7 | EVA (270 µm) | AD2:PE2=5:5 (10 µm) | EVOH (20 µm) | A | 0.73 | 3.0 | B | A |
| Example 8 | PP(270µm) | AD1:PP=5 : 5 (10 µm) | EVOH (20 µm) | A | 0.71 | 3.0 | A | C |
| Example 9 | PE1:PE4=8:2 (270 µm) | AD2:PE2=5:5 (10 µm) | EVOH (20 µm) | A | 0.69 | 3.0 | A | A |
| Example 10 | PP (270 µm) | AD1:PP=9:1 (10 µm) | EVOH (20 µm) | B | 0.71 | 15.0 | B | C |
| Example 11 | PP (270 µm) | AD1:PP=1:9 (10 µm) | EVOH (20 µm) | A | 0.73 | 1.0 | B | C |
| Comparative Example 1 | PE2 (270 µm) | AD2 (10 µm) | EVOH (20 µm) | C | 0.68 | 20.0 | B | A |
| Comparative Example 2 | PP (270 µm) | AD1 (10 µm) | EVOH (20 µm) | C | 0.71 | 20.0 | B | A |
| Comparative Example 3 | PE1 (270 µm) | PE2 (10 µm) | EVOH (20 µm) | A | 0.74 | 0.1 | C | A |

| | | | | | | | | |
|---|---|---|---|---|---|---|---|---|
| In table, for example, description of "AD2:PE2=5:5" represents a blend obtained by blending AD2 and PE2 at a mass ratio of 5:5. A unit of the oxygen barrier property is [cc/mm. atm. day], and a unit of the peeling strength is [N/15 mm]. In addition, in Comparative Example 3, delamination occurred at the bag drop test. | | | | | | | | |

The coextruded films of respective examples were provided with the barrier layer formed from EVOH and thus had a sufficient barrier property. In addition, the surface glossiness was satisfactory, the irregularity was suppressed, and the bonding strength (peeling strength) was sufficient for practical use.

### Industrial Applicability

According to the invention, it is possible to provide a coextruded film that has a sufficient barrier property and that is excellent in the exterior appearance, and a bag using the coextruded film.

### Reference Signs List

10: COEXTRUDED FILM
11: BARRIER LAYER
12: ADHESIVE LAYER
13: SEALANT LAYER

## Claims

1. A coextruded film, comprising:
a barrier layer that is formed from an ethylene vinyl alcohol copolymer;
a sealant layer that is formed from a polyolefin resin; and
an adhesive layer that is formed from a blend of a maleic anhydride modified polyolefin resin and a polyolefin resin, and that is provided between the barrier layer and the sealant layer.

2. The coextruded film according to claim 1,
wherein the sealant layer is a blend of a metallocene-based linear low-density polyethylene resin, and a high-pressure low-density polyethylene resin.

3. The coextruded film according to claim 1,
wherein the sealant layer includes a layer that is adjacent to the adhesive layer and is formed from a metallocene-based linear low-density polyethylene resin and a layer that is adjacent to the layer and is formed from a high-density polyethylene resin.

4. A bag that is formed from the coextruded film according to any one of claims 1 to 3.
